Europäisches Patentamt

European Patent Office

Office européen des brevets

(19)

(11) Veröffentlichungsnummer: **0 024 617**

**A1**

(12) **EUROPÄISCHE PATENTANMELDUNG**

(21) Anmeldenummer: 80104735.8

(22) Anmeldetag: 11.08.80

(51) Int. Cl.³: **H 04 Q 11/04**
**H 04 J 3/12, H 04 M 11/06**

(30) Priorität: 24.08.79 DE 2934357
30.01.80 DE 3003290

(43) Veröffentlichungstag der Anmeldung:
11.03.81 Patentblatt 81/10

(84) Benannte Vertragsstaaten:
BE CH DE FR GB IT LI NL SE

(71) Anmelder: SIEMENS AKTIENGESELLSCHAFT Berlin
und München
Postfach 22 02 61
D-8000 München 22(DE)

(72) Erfinder: Gerke, Peter, Dipl.-Ing.
Rudolf-Diesel-Strasse 20
D-8032 Gräfelfing(DE)

(72) Erfinder: Petersen, Joachim, Dr.
Hauschildstrasse 1b
D-8000 München 71(DE)

(54) **Digital-Fernmeldesystem.**

(57) In einem Digital-Fernmeldesystem mit jeweils in einen 56-kbit's-Hauptkanal (ib) und einen 8-kbit/s-Hilfskanal (isob) unterteilten 64-kbit/s-Einheitskanälen dient jeweils durchgehend von Teilnehmer zu Teilnehmer nur der 56-kbit/s-Hauptkanal (ib) gegebenenfalls alternativ der Übertragung von PC- oder Δ-modulierten Sprachsignalen und/oder der schnellen Festbildübertragung oder schnellen Datenübertragung von Teilnehmer zu Teilnehmer, während der 8-kbit/s-Hilfskanal (isob) jeweils nur sowohl der Übertragung von vermittlungstechnischen Signalisierungszeichen als auch einer langsamen Festbildübertragung bzw. langsamen Datenübertragung von Teilnehmer zu Teilnehmer sowie einer Übertragung von Teilnehmer-zu-Teilnehmer-Steuerinformationen und/oder von Fernwirk- und ähnlichen Sonderdienstinformationen zur Verfügung steht. In den Teilnehmervermittlungsstellen werden ständig die 8-kbit/s-Hilfskanäle (isob) aller Teilnehmer der betreffenden Vermittlungsstelle mitgelesen und Signalisierungszeichen und Sonderdienstinformationen von der Vermittlungsstelle nach Maßgabe von den in den 8-kbit/s-Hilfskanälen (isob) übertragenen Informationen beigefügten Dienstindikationssignalen ausgeblendet bzw. eingeblendet.

FIG 2



SIEMENS AKTEINGESELLSCHAFT
Berlin und München

Unser Zeichen
VPA 79 P 7810 EUR

Digital-Fernmeldesystem

Neuere Entwicklungen der Fernmeldetechnik führen zu Digital-Fernmeldesystemen, die für Fernsprechteilnehmer eine Wandlung der Sprachsignale in digitale Signale bereits in der Teilnehmerstelle vorsehen und in denen zwischen der Teilnehmerstelle und der Vermittlungsstelle, an die die Teilnehmerstelle unmittelbar angeschlossen ist, eine Digital-Fernsprech-Verbindung über einen einheitlichen Digital-Nachrichtenkanal mit einer Bitrate von 64 kbit/s (je Übertragungsrichtung) aufbaubar ist und außerdem außerhalb ("outslot") dieses 64-kbit/s-Nachrichtensignals eine Signalisierungsverbindung für eine sogenannte outslot-Signalisierung über einen zusätzlichen Signalkanal mit einer Bitrate von beispielsweise 8 kbit/s (je Übertragungsrichtung) ständig bestehen kann, wobei zusätzlich zu einer solchen outslot-Signalisierung auch eine sogenannte inslot-Signalisierung innerhalb ("inslot") des Nachrichtenkanals vorgesehen sein kann (ISS'79, 773...780); außer Sprache können in den 64-kbit/s-Einheitskanälen eines derartigen Digital-Fernmeldesystems auch Texte, Daten und Bilder über digitale Teilnehmeranschlüsse übertragen werden.

In solchen Digital-Fernmeldesystemen besteht die Möglichkeit, daß bestimmte Teilnehmerstellen vermittlungstechnisch nicht derjenigen Vermittlungsstelle zugehörig sind, an die die betreffende Teilnehmerstelle unmittelbar angeschlossen ist, sondern - über eine über die genannte Vermittlungsstelle verlaufende, permanent durchgeschaltete Verbindung - einer anderen Vermittlungsstelle; eine solche Netzkonfiguration kann z.B. in einem dienstintegrierten Digital-Fernmeldesystem, in dem Daten-Teilnehmerstellen über durch Fernsprech-Vermitt-

Spr 1 Bo / 29.1.1980

lungsstellen hindurchführende, permanent durchgeschaltete Verbindungen nur mittelbar an eine zugehörige Daten-Vermittlungsstelle angeschlossen sind (telefonreport 11 (1975) 3, 86...90), oder auch im Falle einer außenliegenden Nebenstelle gegeben sein, die mit ihrer Nebenstellenvermittlungsanlage über einen über das öffentliche Fernmeldenetz verlaufenden Mietkanal verbunden ist.

Ein solcher nur mittelbarer Anschluß einer Teilnehmerstelle an die zugehörige Vermittlungsstelle kann dazu führen, daß auf einem Teil des gesamten Anschlußweges nur der einheitliche eigentliche Nachrichtenkanal mit der Bitrate von 64 kbit/s zur Verfügung steht, nicht aber auch ein zusätzlicher Signalkanal, so daß für unmittelbar und für mittelbar angeschlossene Teilnehmerstellen gleiche Kommunikationsmöglichkeiten und Signalisierungsprozeduren und entsprechende Schnittstellenbedingungen zumindest nicht ohne weiteres möglich sind; gleiche Kommunikationsmöglichkeiten, Signalisierungsprozeduren und Schnittstellenbedingungen werden aber insbesondere bei auch sonst gleichen Teilnehmerstellen gerade gefordert sein.

Die Erfindung zeigt einen Weg, solchen Umständen Rechnung zu tragen und in einem Fernmeldesystem mit 64-kbit/s-Einheitskanälen einheitliche Kommunikationsmöglichkeiten, Signalisierungsprozeduren und Schnittstellenbedingungen zu ermöglichen: In einem Digital-Fernmeldesystem mit jeweils in einen 56-kbit/s-Hauptkanal und einen 8-kbit/s-Hilfskanal unterteilten 64-kbit/s-Einheitskanälen dienen gemäß der Erfindung durchgehend auf den Teilnehmeranschlußleitungen, in den Vermittlungsstellen und auf den dazwischenliegenden Übertragungsstrecken nur die 56-kbit/s-Hauptkanäle jeweils alternativ der Übertragung von PC- oder Δ-modulierten Sprachsignalen, der Festbildübertragung oder der schnellen Datenüber- tragung von Teilnehmer zu Teilnehmer, während die 8-kbit/s-Hilfskanäle jeweils nur sowohl der Übertragung der vermittlungstechnischen Signalisierungszeichen als auch einer langsamen Datenübertragung von Teilnehmer zu Teilnehmer sowie der Übertragung von Teilnehmer-zu-Teilnehmer-Steuerinformationen und von Fernwirk- und ähnlichen Sonderdienstinformationen zur Verfügung stehen, wobei in den Teilnehmervermittlungsstellen ständig die 8-kbit/s-Hilfskanäle aller Teilnehmer der betreffenden Vermittlungsstelle mitgelesen und Signalisierungszeichen und Sonderdienstinformationen von der Vermittlungsstelle nach Maßgabe von den in den 8-kbit/s-Hilfskanälen übertragenen Informationen beigefügten Dienstindikationssignalen ausgeblendet bzw. eingeblendet werden.

In einer zusätzlichen Variante zu dem aufgezeigten Weg ist das Digital-Fernmeldesystem mit jeweils in einen 56-kbit/s-Hauptkanal und einen 8-kbit/s-Hilfskanal unterteilten 64-kbit/s-Einheitskanälen erfindungsgemäß dadurch gekennzeichnet, daß durchgehend auf den Teilnehmeranschlußleitungen, in den Vermittlungsstellen und auf den dazwischenliegenden Übertragungsstrecken nur die 56-kbit/s-Hauptkanäle jeweils der Übertragung von PC- oder Δ-modulierten Sprachsignalen und/oder der schnellen Festbildübertragung oder schnellen Datenübertragung von Teilnehmer zu Teilnehmer dienen und die 8-kbit/s-Hilfskanäle jeweils nur sowohl der Übertragung der vermittlungstechnischen Signalisierungszeichen als auch einer langsamen Festbildübertragung bzw. langsamen Datenübertragung von Teilnehmer zu Teilnehmer sowie der Übertragung von Teilnehmer-zu-Teilnehmer-Steuerinformationen und/oder von Fernwirk- und ähnlichen Sonderdienstinformationen zur Verfügung stehen, wobei in den Teilnehmervermittlungsstellen ständig die 8-kbit/s-Hilfskanäle aller Teilnehmer der betreffenden Vermittlungsstelle mitgelesen und Signalisierungszeichen und Sonderdienstinformationen von der Vermittlungsstelle nach Maßgabe von den in den 8-kbit/s- Hilfskanälen übertragenen Informationen beigefügten Dienstindikationssignalen ausgeblendet bzw. eingeblendet werden.

Die Erfindung bringt neben dem Vorteil einer verringerten Bitratenbelastung der Teilnehmeranschlußleitungen den weiteren Vorteil mit sich, daß alle Teilnehmer des Fernmeldesystems unabhängig von etwa unterschiedlichen vermittlungstechnischen Zugehörigkeiten in gleicher, einheitlicher Weise von den Kommunikationsmöglichkeiten eines bzw. beider Teilkanäle Gebrauch machen können, wobei Teilnehmerstellen für nur eine Kommunikationsart, z.B. Fernsprechen, und Teilnehmerstellen für mehrere Kommunikationsarten, z.B. neben Fernsprechen insbesondere auch langsame Festbildübertragung (Fernkopieren, Einzelbildübertragung), in ihren Schnittstellenbedingungen übereinstimmen können bzw. einheitliche Teilnehmerstellen wahlweise in einer Kommunikationsart oder in Mischkommunikation betrieben werden können; von Vorteil ist weiterhin, daß ein Multiplexen von Teilnehmer-Einzelkanälen ohne Zusatzaufwand für die Signalisierungszeichen und die weiteren im 8-kbit/s- Hilfskanal realisierten Kommunikationsarten möglich ist und daß die Wähl-Tastatur einer Teilnehmerstelle in einfacher Weise auch für die Abgabe von von Teilnehmer zu Teilnehmer (langsam) zu übertragenden Daten, z.B. für Bestellvorgänge, ausnutzbar ist.

Es sei an dieser Stelle bemerkt, daß es (z.B. aus NTZ 20 (1967) 11, 667...682) bekannt ist, daß in einem PCM-Übertragungssystem mit 64-kbit/s-Fernsprechkanälen jeweils 7 Bit jedes PCM-Worts der Sprachsignalcodierung und 1 Bit als Signalisierungsimpuls dienen können; Probleme der vermittlungstechnischen Zugehörigkeit von Teilnehmerstellen und ihrer Kommunikationsmöglichkeiten, insbesondere von Misch- und Sonderdienstkommunikationen, werden dabei jedoch nicht betrachtet.

Anhand der Zeichnungen sei die Erfindung noch näher erläutert. Dabei zeigt
Fig. 1 ein Ausführungsbeispiel für ein Digital-Fernmeldesystem gemäß der Erfindung;

Fig. 2 zeigt schaltungstechnische Einzelheiten dazu.

Fig. 3 verdeutlicht die Lage und Inanspruchnahme von Haupt- und Hilfskanal.

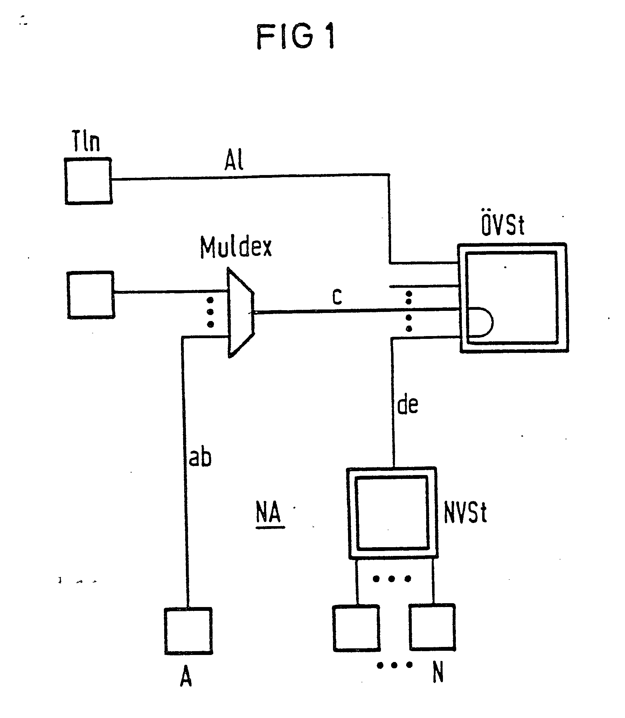

In der Zeichnung Fig. 1 ist schematisch in einem zum Verständnis der Erfindung erforderlichen Umfange ein Digital-Fernmeldesystem mit einer Digital-Vermittlungsstelle ÖVSt dargestellt, an die zugehörige Teilnehmerstellen unmittelbar über einen Multiplexer/Demultiplexer Muldex mit anschließender Zeitmultiplexleitung c oder auch, wie die Teilnehmerstelle Tln, direkt über ihre Anschlußleitung Al angeschlossen sind; bei Digital-Vermittlungsstelle ÖVSt, Multiplexleitung c, Multiplexer/Demultiplexer Muldex, Anschlußleitung Al und Teilnehmerstelle Tln kann es sich beispielsweise um einen Ausschnitt aus einem öffentlichen Digital-Fernsprechnetz für Sprach- und ggf. auch Daten-, Text- u./o. Bild-Kommunikation handeln. Mit einem weiteren Eingang/Ausgang des Multiplexers/Demultiplexers Muldex ist über eine Anschlußleitung ab eine Teilnehmerstelle A verbunden, die einer anderen, ihrerseits mit der Digital-Vermittlungsstelle ÖVSt verbundenen Vermittlungsstelle NVSt, beispielsweise der Vermittlungsstelle einer Digital-Fernsprechnebenstellenanlage NA mit weiteren Teilnehmerstellen ...N, zugehören möge, mit dieser Vermittlungsstelle NVSt aber nur mittelbar verbunden ist, nämlich über die Multiplexleitung c und eine in der Digital-Vermittlungsstelle ÖVSt permanent - oder ggf.
auch nur von Fall zu Fall - durchgeschaltete Verbindung, wie sie in Fig.1 angedeutet ist.

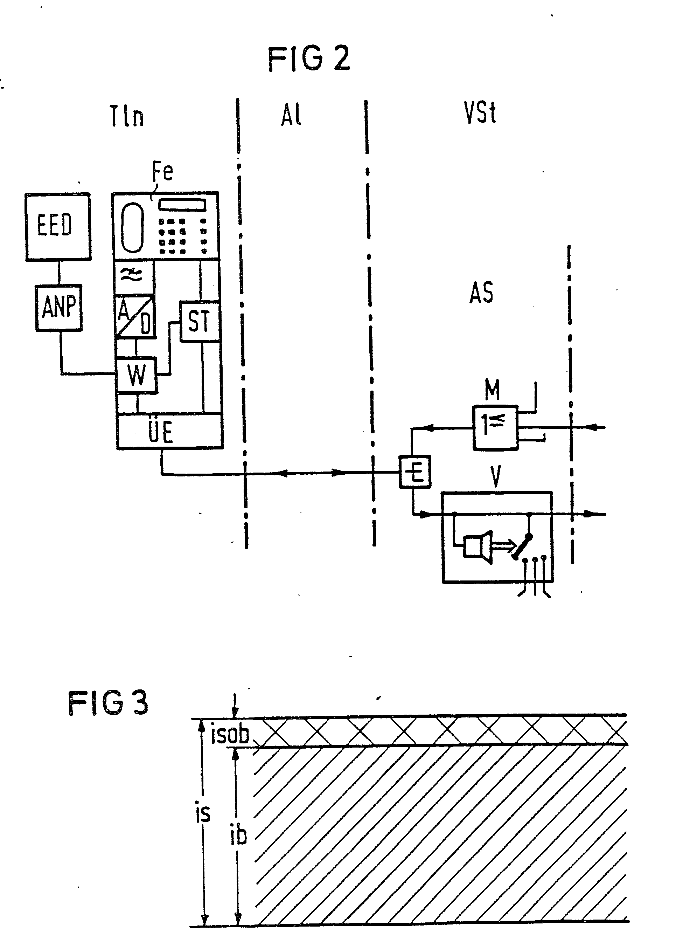

Fig.2 zeigt in ihrem linken Teil weiter ins Einzelne
gehend ein Ausführungsbeispiel einer Teilnehmerstelle
Tln. Wie daraus ersichtlich ist, kann die Teilnehmerstelle Tln zunächst einen Digitalfernsprecher Fe mit
Wähltastatur, Anzeigedisplay, Filter, Analog/Digital-
Wandler, das Senden und Empfangen unter Übertragungsrichtungstrennung sowie die Taktgewinnung und Synchronisierung ermöglichender Übertragungseinrichtung ÜE und
den Signalisierungszeichenaustausch mit der Vermittlungsstelle abwickelnder Steuereinrichtung ST aufweisen, wobei letztere insbesondere durch einen Mikroprozessor realisierbar sein kann. Darüberhinaus kann die
Teilnehmerstelle aber auch eine Endeinrichtung EED für
andere Dienste, wie z.B. Daten- oder schnelle Festbildübertragung oder beispielsweise langsame Festbildübertragung, umfassen, die über eine Anpassungsschaltung ANP
an eine beim Digitalfernsprecher Fe vorgesehene, ggf.
von der Steuereinrichtung ST gesteuerte Weichenschaltung
W angeschlossen ist. Diese Weichenschaltung W kann beispielsweise einen Teilkanal-Multiplexer/-Demultiplexer
aufweisen, der vom Digitalfernsprecher Fe kommende Fernsprech-Digitalsignale und beispielsweise von der durch
einen Fernkopierer gegebenen Endeinrichtung EED kommende
Fernkopier-Digitalsignale zu einem gemeinsamen, im abgehenden 64-kbit/s-Einheitskanal fließenden Bitstrom bündelt,
in dessen Rahmen Fernsprech-Signalbits und Fernkopier-
Signalbits jeweils an vorbestimmten Stellen auftreten,
bzw. in der umgekehrten Übertragungsrichtung die im
ankommenden Bitstrom enthaltenen Fernsprech-Signalbits
und Fernkopier-Signalbits wieder auf Fernsprecher Fe
im Beispiel durch einen Fernkopierer gegebene Endeinrichtung EED auffächert.

Es sei bemerkt, daß ggf. bei einer Teilnehmerstelle auch mehrere solche Endeinrichtungen (EED) für unterschiedliche Dienste vorgesehen sein können oder daß eine Teilnehmerstelle ggf. auch überhaupt nur solche Endeinrichtungen für andere Dienste, nicht aber auch einen Digitalfernsprecher umfassen kann. Es sei außerdem bemerkt,
daß in entsprechender Weise auch andere Teilnehmerstellen des Digital-Fernmeldesystem nach Fig.1, beispielsweise die Teilnehmerstelle A, ausgebildet sein können.

Für die Nachrichtenübertragung von und zu allen an die
Digital-Vermittlungsstelle ÖVSt des Digital-Fernmeldesystems nach Fig.1 angeschlossenen Teilnehmerstellen
Tln,...,A, mögen auf den Anschlußleitungen Al,...ab,...de,
auf der Multiplexstrecke c und ebenso auch auf den in
Fig.1 nicht weiter dargestellten Übertragungsstrecken,
die die Digital-Vermittlungsstelle ÖVSt mit anderen Vermittlungsstellen verbinden mögen, Fernmelde-Einheitskanäle mit einer Bitrate von jeweils 64 kbit/s (je Übertragungseinrichtung) zur Verfügung stehen, wobei, wie
dies in Fig.3 angedeutet ist, jeder 64-kbit/s-Einheitskanal is in einen 56-kbit/s-Hauptkanal ib und einen
8-kbit/s-Hilfskanal isob unterteilt ist.

Dabei dienen nun durchgehend auf den Teilnehmeranschlußstrecken, wie auf der Teilnehmeranschlußleitung Al
der Teilnehmerstelle Tln (in Fig.1 und Fig.2) oder auf
der Teilnehmeranschlußleitung ab der Teilnehmerstelle A
einschließlich der nachfolgenden Multiplexstrecke c
(in Fig.1) und der Verbindungsleitung de (in Fig.1),
in den Vermittlungsstellen, wie in der Digital-Vermittlungsstelle ÖVSt (in Fig.1), und auf zwischen solchen
Vermittlungsstellen liegenden Übertragungsstrecken nur
die 56-kbit/s-Hauptkanäle jeweils (ggf. alternativ )
einer Übertragung von PC-modulierten oder, bei höherer
Sprachqualität, $\Delta$-modulierten Sprachsignalen und/oder
einer schnellen Festbildübertragung bzw. schnellen Datenübertragung von Teilnehmer zu Teilnehmer, wozu die
Teilnehmerstellen Tln...

bzw. A... N generell für einen solchen Betrieb ausgelegt sein mögen.

Die innerhalb ("inslot") der 64-kbit/s-Einheitkanäle,
aber außerhalb ("outband") der 56-kbit/s-Hauptkanäle
liegenden 8-kbit/s-Hilfskanäle isob (in Fig. 3) werden
dagegen von den genannten, in den 56-kbit/s-Hauptkanälen ib (in Fig. 3) abgewickelten Fernmeldediensten
nicht beansprucht; die 8-kbit/s-inslot-outband-Hilfskanäle isob (in Fig. 3) dienen vielmehr ausschließlich
anderen Zwecken, nämlich sowohl der Übertragung der
den Verbindungsaufbau und -abbau steuernden vermittlungstechnischen Signalisierungszeichen zwischen Teilnehmerstellen und Vermittlungsstellen (und umgekehrt)
als auch einer mit Hilfe einer entsprechenden Endeinrichtung EED ermöglichten langsamen Festbildübertragung,
wie Fernkopieren oder Einzelbildübertragung, einer
z.B. mit Hilfe der Wähltastatur bewirkten langsamen Datenübertragung von Teilnehmer zu Teilnehmer und/oder einer
Übertragung von Teilnehmer-zu-Teilnehmer-Steuerinformationen für sogenannte end-to-end-Signalisierungsprozeduren, wie sie beispielsweise bei Mischkommunikation für
den Wechsel der Kommunikationsart (z.B. Umschalten von
Fernsprechen auf Datenübertragung oder Festbildübertragung) benötigt werden, sowie von Fernwirk-
und ähnlichen Sonderdienstinformationen. Bei solchen
Sonderdienstinformationen kann es sich beispielsweise
um zum Teilnehmer hin zu übertragende Fernsteuerbefehle,
z.B. zum Ein- und Ausschalten von Elektrogeräten, oder
Abfragebefehle, z.B. zum Abfragen eines Zählerstandes,
oder, in der umgekehrten Übertragungsrichtung, um Zählerstandsinformationen oder Notrufe handeln. Den in den
8-kbit/s-Hilfskanälen isob (in Fig.3) übertragenen Informationen mögen dabei z.B. mittels der Wähltastatur
erzeugbare Dienstindikationssignale vorangestellt oder
in anderer Weise beigefügt sein. In den Teilnehmervermittlungsstellen werden dann die 8-kbit/s-Hilfskanäle
aller Teilnehmer der betreffenden Vermittlungsstelle ständig, unabhängig davon, ob der betreffende Teilnehmer gerade an einer weiterführenden Verbindung beteiligt ist oder nicht, mitgelesen; dabei werden von der Vermittlungsstelle Signalisierungszeichen und Sonderdienstinformationen nach Maßgabe der beigefügten Dienstindikationssignale ausgeblendet bzw. eingeblendet:

In Fig. 2 ist hierzu angedeutet, daß in der Vermittlungsstelle VSt in der einer Teilnehmeranschlußleitung Al individuell zugehörigen Anschlußschaltung AS empfangsseitig eine Verteilerschaltung V vorgesehen sein kann, die über ein Speicherregister mit nachfolgendem Decoder solche Dienstindikationssignale aufnimmt und jeweils nach Maßgabe eines solchen aufgenommenen Dienstindikationssignals einen Verteiler einstellt, über den die jeweils zugehörigen Signalisierungszeichen bzw. Sonderdienstinformationen zu einer (in Fig. 2 nicht mehr dargestellten) zugehörigen Informationssenke hin ausgeblendet werden. Außerdem ist in Fig. 2 angedeutet, daß in der Anschlußschaltung AS sendeseitig eine ein ODER-Glied enthaltende Mischschaltung M vorgesehen ist, durch die von verschiedenen Datenquellen herrührende, im 8-kbit/s-Hilfskanal über die Anschlußleitung Al zur Teilnehmerstelle Tln hin zu übertragende Sonderdienstinformationen und Signalisierungszeichen mit ebenfalls im 8-kbit/s-Hilfskanal zur Teilnehmerstelle Tln übertragenen Teilnehmer-zu-Teilnehmer-Steuerinformationen und von Teilnehmer zu Teilnehmer übertragenen langsamen Daten zusammengeführt werden.

Abschließend sei noch bemerkt, daß es in Abweichung von den in Fig. 1 dargestellten Verhältnissen auch möglich ist, daß an der Stelle des Multiplexers/Demultiplexers Muldex und/oder der Digital-Vermittlungsstelle ÖVSt jeweils lediglich eine in eine Multiplexleitung (c in Fig. 1) eingefügte Dateneinfügungseinrichtung vorgesehen ist, die den von bzw. zur Teilnehmerstelle A

0024617

bzw. der Vermittlungsstelle NVSt fließenden Bitstrom
in den Bitstrom der Multiplexleitung einkoppelt bzw.
daraus auskoppelt; damit ist eine noch stärkere Entkopplung zwischen im Beispiel öffentlichem Netz und
Nebenstellenanlage gegeben. Solche Dateneinfügungseinrichtungen können z.B. durch Digitalsignal-Einfügungsgeräte gebildet sein, wie sie aus telcom report 2(1979)
Special Issue "Digital Transmission"S.46 bis 51, Fig. 4
und 5, bekannt und unter der Bezeichnung DSE 64K/2 kommerziell erhältlich sind.

Patentansprüche

1) Digital-Fernmeldesystem mit jeweils in einen 56-kbit/s-Hauptkanal und einen 8-kbit/s-Hilfskanal unterteilten 64-kbit/s-Einheitskanälen, dadurch gekennzeichnet, daß durchgehend auf den Teilnehmeranschlußleitungen (Al), in den Vermittlungsstellen (Vst) und auf den dazwischenliegenden Übertragungsstrecken nur die 56-kbit/s-Hauptkanäle (ib) jeweils alternativ der Übertragung von PC-oder Δ-modulierten Sprachsignalen, der Festbildübertragung oder der schnellen Datenübertragung von Teilnehmer zu Teilnehmer dienen und die 8-kbit/s-Hilfskanäle (isob) jeweils nur sowohl der Übertragung der vermittlungstechnischen Signalisierungszeichen als auch einer langsamen Datenübertragung von Teilnehmer zu Teilnehmer sowie der Übertragung von Teilnehmer-zu-Teilnehmer-Steuerinformationen und von Fernwirk- und ähnlichen Sonderdienstinformationen dienen, wobei in den Teilnehmervermittlungsstellen (Vst) ständig die 8-kbit/s-Hilfskanäle (isob) aller Teilnehmer (Tln...A) der betreffenden Vermittlungsstelle (ÖVSt) mitgelesen und Signalisierungszeichen und Sonderdienstinformationen von der Vermittlungsstelle nach Maßgabe von den in den 8-kbit/s-Hilfskanälen (isob) übertragenen Informationen beigefügten Dienstindikationssignalen ausgeblendet bzw. eingeblendet werden.

0024617

2) Digital-Fernmeldesystem mit jeweils in einen 56-kbit/s-Hauptkanal und einen 8-kbit/s-Hilfskanal unterteilten 64-kbit/s-Einheitskanälen, d a d u r c h g e -k e n n z e i c h n e t , daß durchgehend auf den Teilnehmeranschlußleitungen (Al), in den Vermittlungsstellen (VSt) und auf den dazwischenliegenden Übertragungsstrecken nur die 56-kbit/s-Hauptkanäle (ib) jeweils der Übertragung von PC- oder Δ-modulierten Sprachsignalen und/oder der schnellen Festbildübertragung oder schnellen Datenübertragung von Teilnehmer zu Teilnehmer dienen und die 8-kbit/s-Hilfskanäle (isob) jeweils nur sowohl der Übertragung der vermittlungstechnischen Signalisierungszeichen als auch einer lang-samen Festbildübertragung bzw. langsamen Datenübertra-gung von Teilnehmer zu Teilnehmer sowie einer Übertragung von Teilnehmer-zu-Teilnehmer-Steuerinformationen und/oder von Fernwirk- und ähnlichen Sonderdienstinformationen zur Verfügung stehen, wobei in den Teilnehmervermittlungsstellen (Vst) ständig die 8-kbit/s-Hilfskanäle (isob) aller Teilnehmer (Tln...A) der betreffenden Vermittlungsstelle (ÖVSt) mitgelesen und Signalisierungszeichen und Sonderdienstinformationen von der Vermittlungsstelle nach Maßgabe von den in den 8-kbit/s-Hilfskanälen (isob) übertragenen Informationen beige-fügten Dienstindikationssignalen ausgeblendet bzw. einge-blendet werden.

# FIG 1

FIG 2

Tln          Al          VSt

FIG 3

Europäisches
Patentamt

**EUROPÄISCHER RECHERCHENBERICHT**

| | **EINSCHLÄGIGE DOKUMENTE** | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | betrifft Anspruch | | |
| X | THE INTERNATIONAL SYMPOSIUM ON SUBSCRIBER LOOPS AND SERVICES, März 20-24, 1978 Atlanta, US LAWRENCE et al. "Digital service to the subscriber", Seiten 190-194.<br><br>* Seite 192, linke Spalte, Zeile 35 bis rechte Spalte, Zeile 11 *<br><br>-- | 1,2 | | H 04 Q 11/04<br>H 04 J 3/12<br>H 04 M 11/06 |
| X | INTERNATIONAL CONFERENCE ON COMMUNICATIONS Juni 10-14, 1979, Boston, US ORBELL "Preparations for evolution towards an integrated services digital network", Seiten 29.1.1 bis 29.1.6.<br><br>* Seiten 29.1.3, rechte Spalte, Zeilen 26-36 *<br><br>-- | 1,2 | | **RECHERCHIERTE SACHGEBIETE (Int. Cl.³)**<br><br>H 04 Q 11/04<br>H 04 J 3/12<br>H 04 M 11/06 |
| | FR - A - 1 520 482 (INTERNATIONAL STANDARD ELECTRIC)<br><br>* Seite 6, linke Spalte, Zeile 29 bis rechte Spalte, Zeile 12 *<br><br>-- | 1,2 | | |
| | INTERNATIONAL SWITCHING SYMPOSIUM, Mai 7-11, 1979, Paris, FR GRIFFITHS et al."Signalisation entre l'atomé et le central dans des environnements analogiques et numériques", Seiten 413-418.<br><br>* Seite 417, rechte Spalte, dritter Absatz *<br><br>-- ./. | 1,2 | | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 30-10-1980 | DE MUYT |

EPA form 1503.1 06.78

BAD ORIGINAL

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| D | NACHRICHTEN TECHNISCHE ZEITSCHRIFT, Band 20, Heft, 11, November 1967, Berlin, DD GEISSLER "Beitrag zur Planung von Pulscode - Modulations-Systemen (PCM) in postalischen Nachrichtennetzen", Seiten 667-682. * Seite 672, Absatz B3d, Zeilen 19-23 * -- | 1,2 | |
| EP | DE - B - 2 917 572 (TELEFONBAU UND NORMALZEIT) * Spalte 8, Zeilen 6-25 * -- | 1,2 | RECHERCHIERTE SACHGEBIETE (Int. Cl.³) |
| AD | INTERNATIONAL SWITCHING SYMPOSIUM, Mai 7-11, 1979 Paris, FR GERKE et al. "DTN, un réseau téléphonique, entièrement numérique pour la voix, les données, le telex et la télécopie", Seiten 773-780. * Gesamter Artikel * ---- | 1,2 | |